# EUROPÄISCHE PATENTSCHRIFT

(11) **EP 0 331 244 B1**
(45) Veröffentlichungstag und Bekanntmachung des Hinweises auf die Patenterteilung: **03.02.1993**
(21) Anmeldenummer: 89200443.3
(22) Anmeldetag: 22.02.1989
(51) Int. Cl.: C04B 2/04, B01D 53/34

(54) **Verfahren zur kontinuierlichen Trockenlöschung von Kalk**
Process for the continuous dry-slaking of lime
Procédé d'extinction à sec continue de la chaux

(30) Priorität: 03.03.1988 DE 3806798
(43) Veröffentlichungstag der Anmeldung: 06.09.1989
(73) Patentinhaber: METALLGESELLSCHAFT AG, 60015 Frankfurt (DE)
(72) Erfinder: von Jordan, Wenzel, D-6100 Darmstadt 23 (DE); Graf, Rolf, Dr., D-6382 Friedrichsdorf (DE); Gröne, Dieter, D-6520 Worms (DE); Sauer, Harald, Dr., D-6000 Frankfurt 50 (DE)

(56) Entgegenhaltungen:
- EP-A- 0 022 367
- EP-A- 0 105 547
- BE-A- 865 188
- DE-A- 2 116 533
- US-A- 4 277 450

## Beschreibung

Die Erfindung betrifft ein Verfahren zur kontinuierlichen Trockenlöschung von Kalk, wobei feingemahlener Kalk in einer Löscheinrichtung mit Wasser vermischt wird und aus der Löscheinrichtung Kalkhydrat und Abgas getrennt abgezogen werden.

Zur Durchführung eines derartigen Verfahrens sind verschiedene kontinuierlich arbeitende Vorrichtungen aus DE-A-39 18 290 oder DE-A-2 307 343 bekannt geworden. Sie bestehen im wesentlichen aus einem geschlossenen Behälter mit Rühreinrichtung, der Anschlüsse für die getrennte Aufgabe von CaO und Löschwasser sowie für die Abführung von Ca(OH)₂ und Abgas aufweist. Das Abgas enthält hauptsächlich Wasserdampf, der durch mitgerissene Luft verdünnt und mit verhältnismäßig hohen Staubanteilen beladen ist. Der Staub kann aus CaO und Ca(OH)₂ bestehen, wobei Ca(OH)₂ aber überwiegt, zumal der Löschvorgang für die Ca-Teilchen im wasserhaltigen Abgas weitergeht.

Das im Abgas als Staub vorhandene Kalkhydrat neigt zu Anbackungen und Verkrustungen, insbesondere im Bereich der Löschwassereindüsung. Solche Anbackungen und Verkrustungen lassen bei den bekannten Anlagen eine echt kontinuierliche Fahrweise nicht zu, weil sie zur Aufrechterhaltung eines sicheren Betriebes in kurzen Zeitabständen mechanisch entfernt werden müssen, wozu die Anlagen stillgelegt werden.

Daraus ergibt sich die Aufgabe, für das kontinuierliche Trockenlöschen von Kalk eine Verfahrensweise vorzuschlagen, bei der Anbackungen und Verkrustungen infolge des hohen Ca(OH)₂-Gehaltes der Abgase vermieden, zumindest aber deutlich verringert werden, so daß solche Anlagen wirtschaftlicher betrieben werden können.

Diese Aufgabe konnte überraschenderweise dadurch gelöst werden, daß dem Abgas der Trockenlöschanlage heißes Rauchgas zugemischt wird. Dadurch wird das Abgas aufgeheizt und getrocknet, wodurch der kritische Übergang feucht/trocken, der die Anbackungen und Verkrustungen begünstigt, erheblich abgekürzt wird. In gleichem Maße werden die geschilderten Nachteile verringert, wobei es eine Frage der Wirtschaftlichkeit und der jeweiligen Randbedingungen ist, wie groß die zuzumischende Heißgasmenge und deren Temperatur gewählt werden.

Vorteilhafte Weiterbildungen des Erfindungsgedankens sind in den Unteransprüchen 2 bis 5 beschrieben.

Weitere Vorteile können mit dem erfindungsgemäßen Verfahren in den Fällen erzielt werden, in denen die Anlage zur trockenen Kalklöschung zur Bereitstellung des Entschwefelungsmittels für große Abgasvolumen, beispielsweise von Kraftwerken, eingesetzt wird. Das zu entschwefelnde Abgasvolumen weist nämlich im allgemeinen für die Zwecke des erfindungsgemäßen Verfahrens eine geeignete Temperatur auf und steht in ausreichender Menge zur Verfügung. Die Entstaubung der Abgase des Trockenlöschverfahrens kann in der für das zu entschwefelnde Abgasvolumen ohnehin vorhandenen Entstaubungseinrichtung miterledigt werden, ohne daß ein nennenswerter zusätzlicher Aufwand entsteht. Schließlich können die Ca(OH)₂-haltigen Abgase der Trockenlöscheinrichtung auch unmittelbar als Entschwefelungsmittel benutzt werden, indem sie direkt in den zu entschwefelnden Abgasstrom eingebracht werden.

## Patentansprüche

1. Verfahren zur kontinuierlichen Trockenlöschung von Kalk, wobei feingemahlener Kalk in einer Löscheinrichtung mit Wasser vermischt wird und aus der Löscheinrichtung Kalkhydrat und Abgas getrennt abgezogen werden, dadurch gekennzeichnet, daß dem Abgas der Trockenlöschanlage heißes Rauchgas zugemischt wird.

2. Verfahren nach Anspruch 1, dadurch gekennzeichnet, daß dem Abgas der Trockenlöschanlage so viel heißes Rauchgas zugemischt wird, daß das Gemisch aus Abgas der Trockenlöschanlage und heißem Rauchgas eine Temperatur von 90 bis 150°C und eine (relative) Feuchtigkeit von 80 bis 95 % aufweist.

3. Verfahren nach einem der Ansprüche 1 und 2, dadurch gekennzeichnet, daß das Zumischen des heißen Rauchgases tangential und senkrecht zum Abgasstrom erfolgt.

4. Verfahren nach einem der Ansprüche 1 bis 3, dadurch gekennzeichnet, daß das Gasgemisch entstaubt wird.

5. Verfahren nach einem der Ansprüche 1 bis 4, dadurch gekennzeichnet, daß der Wasserdampf aus dem Gasgemisch zumindest teilweise auskondensiert wird und daß man die dabei frei werdende Wärme zur Vorwärmung des Löschwassers benutzt.

## Claims

1. A method for the continuous dry slaking of lime, in which finely ground lime is mixed with water in a slaking apparatus and hydrate of lime and exhaust gases are removed separately from the slaking apparatus, characterised in that hot flue gas is admixed to the exhaust gas of the dry-slaking installation.

2. A method according to Claim 1, characterised in that an amount of hot flue gas is admixed to the exhaust gas of the dry-slaking installation such that the mixture of exhaust gas from the dry-slaking installation and hot flue gas has a temperature of 90 to 150°C and a (relative) humidity of 80 to 95%.

3. A method according to one of Claims 1 and 2, characterised in that the admixing of the hot flue gas takes place tangentially and at right-angles to the stream of exhaust gas.

4. A method according to one of Claims 1 to 3, characterised in that the gas mixture is de-dusted.

5. A method according to one of Claims 1 to 4, characterised in that the water vapour is at least partially condensed out of the gas mixture and that the heat which thus evolves is used to preheat the slaking water.

## Revendications

1. Procédé d'extinction à sec en continu de chaux, qui consiste à mélanger de la chaux finement broyée à de l'eau dans un dispositif d'extinction, et à soutirer, indépendamment, de l'hydrate de chaux et de l'effluent gazeux du dispositif d'extinction, caractérisé en ce qu'il consiste à mélanger du gaz de fumée chaud à l'effluent gazeux de l'installation d'extinction à sec.

2. Procédé suivant la revendication 1, caractérisé en ce qu'il consiste à mélanger tellement de gaz de fumée chaud à l'effluent gazeux de l'installation d'extinction à sec que le mélange d'effluent gazeux de l'installation d'extinction à sec et de gaz de fumée chaud présente une température de 90 à 150°C et une humidité (relative) de 80 à 95 %.

3. Procédé suivant l'une des revendications 1 ou 2, caractérisé en ce qu'il consiste à effectuer le mélange du gaz de fumée chaud tangentiellement et perpendiculairement au courant d'effluent gazeux.

4. Procédé suivant l'une des revendications 1 à 3, caractérisé en ce qu'il consiste à dépoussiérer le mélange de gaz.

5. Procédé suivant l'une des revendications 1 à 4, caractérisé en ce qu'il consiste à condenser, au moins partiellement, la vapeur d'eau du mélange de gaz et à utiliser la chaleur, ainsi libérée, pour préchauffer l'eau d'extinction.
